# EUROPEAN PATENT SPECIFICATION

(11) **EP 4 096 345 B1**
(45) Date of publication and mention of the grant of the patent: **17.09.2025**
(21) Application number: 22175826.1
(22) Date of filing: 27.05.2022
(51) Int. Cl.: H04W 84/12, G08B 13/196, H04W 88/06

(54) **ELECTRONIC MONITORING SYSTEM WITH SECONDARY COMMUNICATION PATH FOR DIAGNOSTICS**
ELEKTRONISCHES ÜBERWACHUNGSSYSTEM MIT SEKUNDÄRER KOMMUNIKATIONSSTRECKE FÜR DIAGNOSE
SYSTÈME DE SURVEILLANCE ÉLECTRONIQUE DOTÉ D'UN CHEMIN DE COMMUNICATION SECONDAIRE POUR DIAGNOSTIC

(30) Priority: 27.05.2021 US 202163193993 P
(43) Date of publication of application: 30.11.2022
(73) Proprietor: Arlo Technologies, Inc., Carlsbad, CA 92008 (US)
(72) Inventor: McRae, Matthew, Laguna Niguel, CA (US)
(74) Representative: Grünecker Patent- und Rechtsanwälte PartG mbB

(56) References cited:
- EP-A2- 2 100 454
- US-A1- 2014 266 705
- US-A1- 2016 338 136
- US-B1- 10 594 990

## Description

### CROSS REFERENCE TO A RELATED APPLICATION

### 1. Field of the Invention

The present invention relates to an electronic monitoring system and, more particularly, to an electronic monitoring system in which connectivity or other issues in a default primary communication path may be automatically identified and reported to a user by way of a secondary or fallback communication path.

### 2. Discussion of the Related Art

Security and other monitoring systems are increasing in popularity and technical sophistication. Recent monitoring systems implemented through WLANs (wireless local area networks) have simplified hardware mounting and installation by eliminating various hardwired signal-conducting wires. Such systems typically include one-and more typically, several-monitoring devices, such as cameras and sensors, that communicate wirelessly with a wide area network (WAN), typically via the Internet. The base system also communicates wirelessly with one or more user devices such as a smart phone, and possibly with an external server such as a cloud-based server.

Although avoiding hardwired component connections can simplify initial component mounting or installation, troubleshooting WLAN-based monitoring systems can present numerous challenges. WLANs are subject to disruption or failure (these terms are used interchangeably herein) from many causes. For example, the user device may move to a position outside of the range of the system's WLAN. Disruptions also may occur, for example, due to a primary RF (radio frequency) network outage, a primary ISP (internet service provider) outage, a primary network SSID (service set identifier) conflict, network interference issues, or even a change in a primary network password or authentication failure. The number and complexity of disruption causes have continued to multiply as WLAN-based monitoring systems have evolved, hindering disruption or failure diagnoses and troubleshooting. These tasks are made still more complicated by the tendency of these systems to implement an increased number and a greater variety of monitoring devices to increase system versatility and coverage.

Since there are no physical connections or conductors between the monitoring devices and the remainder of the system to visually inspect or evaluate with testing equipment; when such issues or faults arise, the users or technical support personnel generally have no or little visibility into the problem. Accordingly, diagnostic approaches include various blind-troubleshooting methods, which typically include guessing with no feedback or indication of component statuses. In addition, the user often is given little or no information concerning the cause of a disruption, apart possibly from the display of a very simple message such as "CONNECTION LOST".

Therefore, the need has arisen to provide a WLAN-based system and/or process that can maintain at least limited connectivity between components of the system in the event of connectivity issues with the communication path between two or more of the components.

The need also has arisen to provide a WLAN-based system and/or method that permits diagnoses of connectivity issues between components of a system despite partial or complete loss of connectivity over a communication path between the components. US 10 594 990 B1 discloses an electronic device (e.g. monitoring system) connected to a security hub via WLAN hub and comprising a short-link radio directly to the user device, the electronic device detects a communication problem with the WLAN communication, detects the cause of the communication problem, and transmit to the server a message comprising the cause (diagnosis data) via the short-link radio to the user device.

US 2014/266705 A1 discloses an emergency assistance system which uses two radios, e.g. WLAN, the main radio and secondary radio are of different technologies to facilitate multiple modes of communication in the event that one communication mode fails. The event detecting component can use secondary radio to report events on the first radio, or otherwise send instructions, to an external alarm system.

US 2016/338136 A1 discloses a user equipment, UE, connected to two network devices, when the connection to the first network device fails, the UE sends the causes (diagnosis data) to the second network device over the second radio link.

### SUMMARY OF THE INVENTION

The invention is defined by the appended independent claims; i.e. the electronic monitoring system of claim 1 and the method of claim 13.

In accordance with a first aspect of the invention, one or more of the identified needs is met by providing an electronic monitoring system that automatically transitions or switches communication paths from a default primary communication path to a fail-over or fallback secondary communication path when connectivity issues are experienced within the primary communication path. This switchover facilitates continuous communication between system components despite a compromised state of the primary communication path. The failure-induced fallback strategy provides a seamless communication environment that can be used for, e.g., performing diagnostics or troubleshooting the issues in the primary communication path using the networked system itself.

According to another aspect of the invention, communication path evaluation and switching, may be implemented through a client device or monitoring device, such as a camera, sensor, or other networked monitoring devices. The monitoring device may implement a polling strategy to determine if it is connected to system components through the primary communication path. As one example, the polling may determine if the monitoring device is connected to backend control services or a backend service, such as a cloud-based server. If the monitoring device determines that it is no longer connected through the primary communication path, then it automatically switches to the secondary communication path and tries to reestablish a connection with the backend service. Once connection is reestablished through the secondary communication path, component status and other fault information can be communicated through the secondary communication path to present information that can be accessed by a user or technical support personnel to facilitate troubleshooting or diagnosis of the issues in the primary communication path.

According to another aspect of the invention, the monitoring device has two communication modes and corresponding communication devices or "radios," a primary radio that communicates through the primary communication path and a secondary radio that communicates through the secondary communication path. The secondary radio may operate at a lower frequency than the primary radio. The low(er) frequency of the secondary radio communications may be in a sub-GHz (gigahertz) band such as a RF (radio frequency) band, whereas the primary radio may implement a WIFI RF communications standard such as a 2.4GHz frequency band and/or a 5GHz frequency band.

Communication through the secondary communication path may permit the maintenance of at least limited system functionality, such as transmission of sensor data.

The secondary radio(s) may have a longer range than the primary radio(s), permitting limited connection of the monitoring device to system in the event that the monitoring device moves out of the transmission range of the primary radio.

These and other features and advantages of the invention will become apparent to those skilled in the art from the following detailed description and the accompanying drawings. It should be understood, however, that the detailed description and specific examples, while indicating preferred embodiments of the present invention, are given by way of illustration and not of limitation.

### BRIEF DESCRIPTION OF THE DRAWINGS

Preferred exemplary embodiments of the invention are illustrated in the accompanying drawings in which like reference numerals represent like parts throughout, and in which:
FIG. 1 is a schematic representation of an electronic monitoring system with a secondary communication path for diagnostics in accordance with an aspect of the invention;
FIG. 2 is a schematic representation of a variant of the electronic monitoring system with a secondary communication path for diagnostics of FIG. 1 in accordance with an aspect of the invention;
FIG. 3 is a schematic representation of data communication through a primary communication path of the system in an operational state in accordance with an aspect of the invention;
FIG. 4 is a schematic representation of failed communications due to a range or other connectivity issue in the primary communication path of the system of FIG. 3 in a fault state in accordance with an aspect of the invention;
FIG. 5 is a schematic representation of an initiation of establishing a secondary communication path of the system of FIG. 3 in accordance with an aspect of the invention;
FIG. 6 is a schematic representation of data communication through the secondary communication path of the system of FIG. 3 in accordance with an aspect of the invention; and
FIG. 7 is a flowchart illustrating a communication path switching operation for maintaining system communications during connection issues of a primary communication path to facilitate diagnosing the connection issues in accordance with an aspect of the invention.

### DETAILED DESCRIPTION OF THE PREFERRED EMBODIMENTS

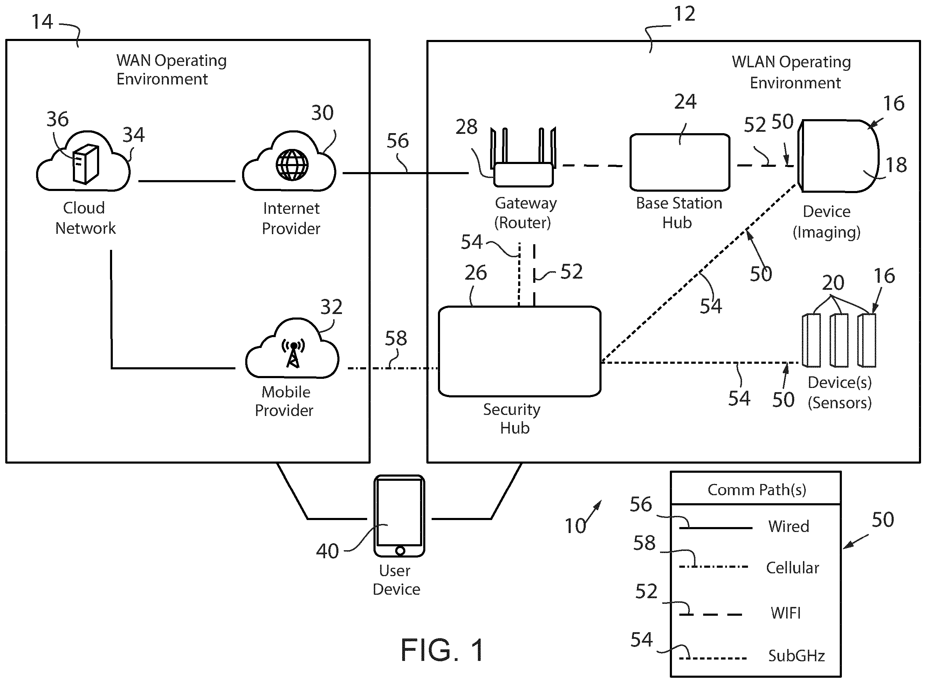

Referring now to FIG. 1, in accordance with an aspect of the invention, an electronic monitoring system 10 is provided that is implemented in a WLAN (wireless local area network) operating environment or WLAN 12. The WLAN 12 is communicatively connected to a WAN (wide area network) operating environment or WAN 14. Within WLAN 12, various monitoring devices 16, sometimes referred to as "client devices," are wirelessly networked to a base station or high frequency hub 24 which, in turn, communicates with the WAN 14 via a gateway hub shown as gateway router 28. Most systems will employ several monitoring devices 16 of the same or varying configurations as described below. Base station hub 24 and router 28 provide a high frequency connection to the WAN 14. Base station hub 24 may be eliminated as a stand-alone module if its functionality and circuitry are incorporated into the gateway router 28, in which case the router 28 also serves as a base station hub. It is also conceivable that some of the functionality of the base station hub 24 could be incorporated into the monitoring devices 16 and/or an external server, such as the cloud-based server 36 described below. The system also includes a security hub 26 that communicates with the monitoring device(s) 16 and with the WAN 14, and that provides a low frequency connection between the WAN 14 and the monitoring devices 16. It also communicates with the router 28, such as through a high frequency connection 52 and/or a low frequency connection 54 to the router 28. Conceivably, the security hub 26 also could be provided with the capability providing a high frequency connection with the devices 16. Thus, at least some of the monitoring devices have two radios operating at different frequencies. A first, "primary" radio operates at a high frequency, typically of 2.4 GHz to 5 GHZ, during period of normal conductivity to perform monitoring and data capture functions such as video capture and transmission, sound transmission, motion sensing, etc. The second or "secondary radio" may be of considerably longer frequency in the sub-GHz or even RF range and may have longer range than the primary radio(s). The secondary radio may be operable, when communications over the primary communication path are disrupted, either due to system outages or an out of range condition, to permit the system to generate, transmit and display information obtained from the performance diagnostic and troubleshooting operations.

Still referring to FIG. 1, each monitoring device 16 may perform any of a variety of monitoring, sensing, and communicating functions. One such device may include an imaging device 18, such as a video camera, that is configured to capture and store visual images or video of the monitored area within the environment. One such camera is a video camera, which could be an Arlo^{®} camera available from Arlo Technologies, Inc. of Carlsbad, California. Typically, system 10 will include two or more monitoring devices 16 that are mounted to face toward respective areas being monitored, such as around a building or other structure or area. Instead of or in addition to containing a video camera or other imaging device 18, one or all of the monitoring devices 16 may include one or more sensors 20 configured to detect one or more types of conditions or stimulus; for example, motion, opening or closing events of doors or windows, the presence of smoke, carbon monoxide, water leaks, and temperature changes. The monitoring devices 16 may further include or be other devices such as audio devices; including microphones, sound sensors, and speakers configured for audio communication or providing audible alerts, such as Arlo Chime audible devices. The cameras or imaging devices 18, sensors 20, or other monitoring devices 16 also may be incorporated into form factors of other house or building accessories; such as doorbells, floodlights, etc.

Still referring to FIG. 1, gateway router 28 is typically implemented as a WIFI hub that communicatively connects WLAN 12 to WAN 14 through an internet provider 30. Internet provider 30 includes hardware or system components or features such last-mile connection(s), cloud interconnections, DSL (digital subscriber line), cable, and/or fiber-optics. As mentioned, the functionality of the base station hub 24 also could be incorporated into the router 28, in which case the router 28 becomes the base station hub as well as the router. Another connection between WLAN 12 and WAN 14 may be provided between security hub 26 and a mobile provider 32. Mobile provider 32 includes hardware or system components or features to implement various cellular communications protocols such as 3G, 4G, LTE (long term evolution), 5G, or other cellular standard(s). Besides the mobile connection, security hub 26 is typically also configured to connect to WAN 14 by way of its connection to router hub 28 and the router hub's connection to WAN 14 through internet provider 30. Each internet provider 30 and mobile provider 32 allows the components of system 10 to interact with a backend system or control service that can control functions or provide various processing tasks of components of system 10, shown as a cloud-based backend control service system 34, which could be an Arlo SmartCloud system. The backend system, such as the cloud-based control service system 34, includes at least one server 36 and typically provides, for example, cloud storage of events, AI (artificial intelligence) based processing such as computer vision, and system access to emergency services.

Still referring to FIG. 1, one or more user devices 40, such as a smart phone, tablet, laptop, or PC may communicate with various components or devices within each of WLAN 12 and WAN 14 to provide an interface through which a user may interact with system 10. Each user device 40 includes a display system that typically includes both an audio display and a video display, such as a touchscreen. Each user device 40 also has internal computing and storage capabilities and a program or application, such as the Arlo Smart application, serving as the user interface with the remainder of system 10.

Still referring to FIG. 1, within WLAN 12, multiple communication paths 50 are defined that transmit data between the various components of system 10. Communication paths 50 include a default or primary communication path 52 providing communication between each monitoring device 16 and the base station hub 26 (or the router 28 if a base station is not utilized), and a fail-over or fallback secondary communication path 54 providing communication between the monitoring device 16 and the security hub 26. Optionally, some of the monitoring devices 16 that do not require high bandwidth to operate, such as the sensors 20 shown in FIG. 1, may be able to fully communicate through the secondary communication path 54 after a fail-over path-switching event, or may be configured to only communicate through the secondary communication path 54. Thus, even during a failure of the primary communication path 52, sensors 20 will continue to operate normally. Other monitoring devices 16 that require high bandwidth to communicate may maintain at least some of their functions and operations while performing at lower-bandwidths. An example is an imaging device 18 that may continue its optical monitoring activities of an environment, but in a low-data mode that implements still image(s) and/or video capture with lower-resolution (for both still images and video capture) and/or shorter clip duration (for video capture) while communicating through the secondary communication path 54 than in its normal operational mode(s).

Still referring to FIG. 1, a collective area in which device communication can occur through the primary communication path 52 defines a primary coverage zone. A second, typically extended, collective area in which the device communication can occur through the secondary communication path 54 defines a secondary coverage zone. A wired communication path 56 is shown between the router 28 and the internet provider 30, and a cellular communication path 58 is shown between security hub 26 and mobile provider 32. WAN 14 typically includes various wireless connections between or within the various systems or components, even though only wired connections 56 are shown. The controller of one or more of the monitoring devices 16 also could provide a wireless communication path 52 directly to the router 28, even if the base station hub 24 also is present.

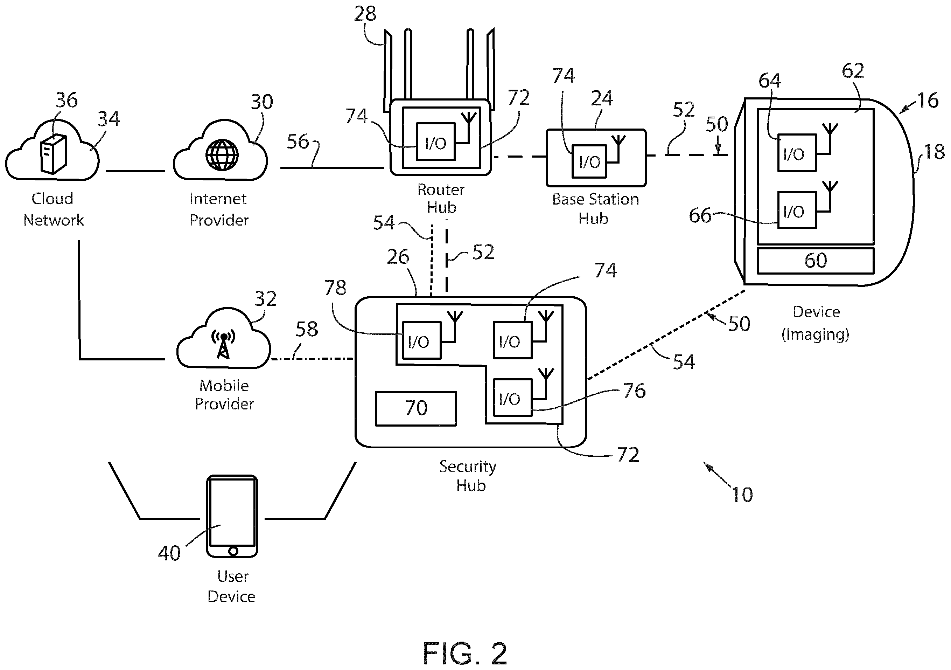

Referring now to FIG. 2, system 10 is configured to implement a seamless communication environment by implementing a communication path switching strategy as a function of the operational state of primary and/or secondary communication paths 52, 54. The seamless communication environment may be achieved by providing the monitoring device(s) 16 and hubs 24 and 26 with circuitry, software, and cooperating components that facilitate recognizing, for example, connectivity issues in the primary communication path 52. As with the first embodiment, base station hub 24 may be omitted if its functionality is contained in other devices, most typically the router 28. If connectivity issues in the primary communication path 52 are recognized, then system 10 automatically switches to implementing data transfer through the secondary communication path 54 in order to maintain communications through system 10

Still referring to FIG. 2, each monitoring device 16 is configured to acquire data and to transmit it to a respective hub 24 and/or 26 for further processing and/or further transmission to a server such as the server 36 of the cloud-based control service system 34 and/or the user device(s) 40. The server 36 or other computing components of system 10 or otherwise in the WLAN 12 or WAN 14 can include or be coupled to a microprocessor, a microcontroller or other programmable logic element (individually and collectively considered "a controller") configured to execute a program. The controller(s) also may be contained in whole or in part in the monitoring device 16, base station hub 24, security hub 26, the server 36, and/or the WIFI hub or router 28. Alternatively, interconnected aspects of the controller and the programs executed by it could be distributed in various permutations within the monitoring device 16, the hubs 24 and 26, router 28, and the server 36. This program may be utilized in filtering, processing, categorizing, storing, recalling, and transmitting data received from the monitoring device 16 via the hubs 24 and 26, router 28, and server 36. Server 36 or other appropriate system devices may also be in communication with or include a computer vision program ("CV"), which can apply one or more filters or processes, such as edge detection, facial recognition, motion detection, etc., to detected one or more characteristics of the recording such as, but not limited to, identifying an individual, animal, vehicle, or package present in the recording.

Still referring to FIG. 2, each monitoring device 16 may be battery powered or wired to a power source, and is shown here with a power supply (battery) 60. Each monitoring device 16 has circuitry 62 that includes corresponding hardware, firmware, software, or any combination thereof. Circuitry 62 of camera-type imaging device 18 implementations of monitoring device 16 may include, for example, imagers, an audio circuit, a media encoder, a processor, and a non-transient memory storage device, among other components. Regardless of the particular type of monitoring device 16, the circuitry 62 of monitoring devices 16 include multiple wireless I/O communication devices or radios, including a primary radio 64 and a secondary radio 66.

Still referring to FIG. 2, as shown in security hub 26, each hub may have circuitry 72 that includes corresponding hardware, firmware, software, or any combination thereof for controlling, for example, data transmission or other communications through respective segments of system 10. Circuitry 72 includes a processor and a non-transient memory storage device, among other components. Circuitry 72 of the different hubs of system 10 may have different numbers and types of wireless I/O communication devices or radios, while allowing for the establishment of discrete communication paths 50, with each radio including, for example, a transceiver and cooperating antenna for transmitting and receiving signals or data. For example, the circuitry 72 of router 28 is shown with a primary radio 74 that transmits data within the WLAN 12 (FIG. 1), whereas the circuitry of security hub 26 is shown with multiple radios. The security hub's 26 radios include a primary radio 74 which communicates with the primary radio 74 of router 28, a secondary radio 76 which communicates with the secondary radio 66 of the monitoring device 16 through the communication paths 54 of WLAN 12 (FIG. 1), and a cellular radio 78 that transmits data between the WLAN 12 (FIG. 1) and WAN 14 (FIG. 1) through the cellular communication path 58.

Still referring to FIG. 2, primary radios 64, 74 transmit data at a different frequencies and bandwidths than the secondary radios 66, 76 so that the primary and secondary communication paths 52, 54 correspondingly define different operational frequencies and bandwidths. Typically, the primary communication path 52 has a higher frequency, a higher bandwidth, and a lower range than the secondary communication path 54. More typically, the primary communication path 52 provides medium range connectivity and operates using a WIFI communication protocol, such as those prescribed by the IEEE 802.11 standards. Although the primary communication path 52 is illustrated as a single path, it is understood that the primary communication path 52 may provide multi-component WIFI communications by, for example, dual-band implementation(s) and corresponding radio(s) that can communicate at both 2.4GHz and 5GHz WIFI frequencies. Suitable frequencies of the sub-GHz secondary communication path 54 include RF ranges of 800-900Mhz, 80-90Mhz, and cellular (3G, 4G, LTE, 5G) bands; and which may be a proprietary communications protocol, such as the ArloRF sub-GHz protocol.

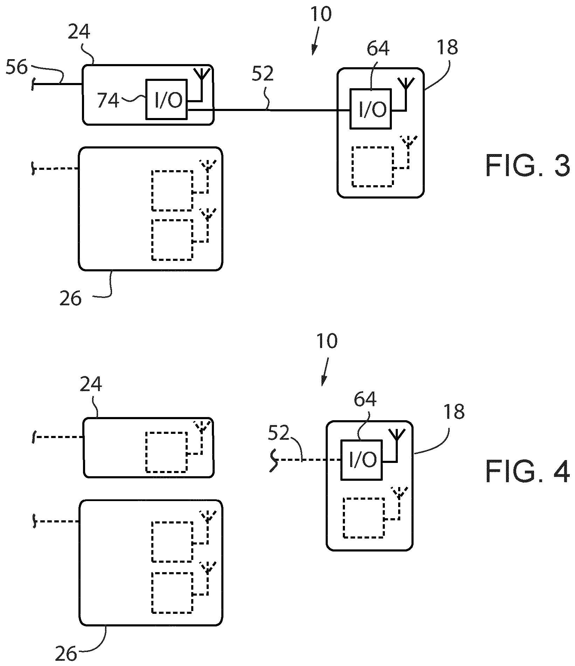

Referring to FIGS. 3-6, a representation of radio and communication path control methodologies is illustrated using an example with an imaging device 18 as a monitoring device 16 (FIG. 1) and with different radios implemented in different hubs (FIG. 1) as base station hub 24 ( which may communicate with or be incorporated into router 28) and security hub 26. Referring now to FIG. 3, system 10 is shown in a default and functioning operational state. The primary communication path 52 is properly functioning and communicatively connecting the imaging device's 18 primary radio 64 through the base station hub 24 (if present) and to the hub's 24 primary radio 74. In a WIFI implementation, router 28 provides WIFI communications of the default primary connection within the WLAN 12 (FIG. 1) for transmitting data through system 10 and typically from WLAN 12 (FIG. 1) to WAN 14 (FIG. 1) through the internet provider system 30 (FIG. 1) for processing by server 36 (FIG. 1). The data transmitted through the primary communication path 52 may include monitoring data. Monitoring data is typically data that corresponds to the normal use of a particular monitoring device. For example, monitoring data from imaging device 18 may include data packets corresponding to an image, captured frames, or a video clip. If the monitoring device additionally includes a motion sensor and a microphone, it may also include a trigger signal indicative of activation of the sensor and/or sound.

Referring now to FIG. 4, a fault state of the system 10 is shown, with a disruption in the communication through the primary communication path 52. This disruption could occur for any number of reasons. Examples include a primary RF (radio frequency) network outage, a primary ISP (internet service provider) outage, a primary network SSID (service set identifier) change, a primary network password or authentication failure, moving of the imaging device 18 out of range of the primary radios 64, 74 (FIG. 2), network interference issues, and power loss issues. During a fault state, the imaging device 18 may detect the communication interruption, for example, by way of a device polling strategy, roaming scan, or other suitable connectivity-confirmation technique. When imaging device 18 detects a communication interruption, it may command a response from itself, which may include attempting to reconnect the imaging device's primary radio 64 to the hub's 24 primary radio 74. If the primary communication path 52 is defined by a dual-band WIFI system, then imaging device 18 may attempt to reconnect the primary radios 64, 74 by broadcasting through another WIFI frequency that is different from the one that was dropped in the interruption. For example, if a 5GHz connection dropped, then imaging device 18 may command an attempted establishment of a 2.4GHz connection to establish communications through the primary communication path 52.

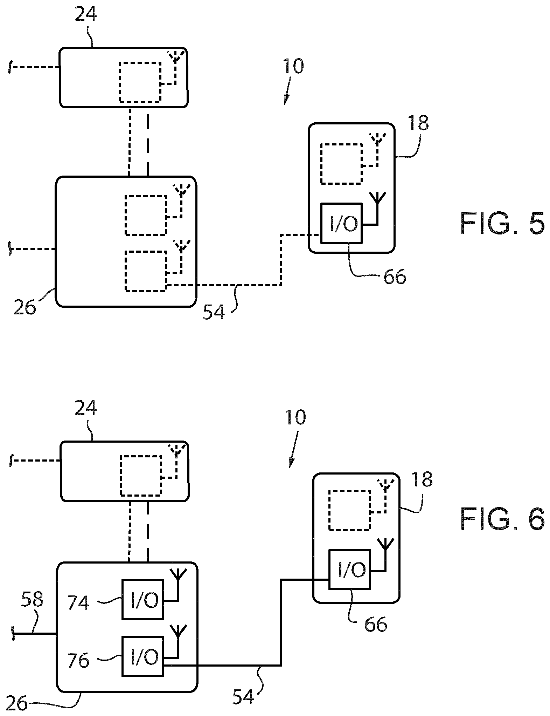

Referring now to FIG. 5, if reconnection through the primary communication path 52 fails, then a fail-over path switching event occurs automatically within imaging device 18 to provide seamless communication through system 10. Typically, any gap in data transmission only corresponds to an amount of time necessary for recognition of the fault state and/or attempted reconnection of the primary communication path 52. The fail-over automatic switching includes activating the secondary radio 66 within imaging device 18, which is typically in a low power state or "sleep" mode while system 10 is in an operational state when the primary communication path 52 connected/operational. When activated by a trigger event such as one or more failed reconnection attempts of the primary communication path 52, the imaging device 18 activates the secondary radio 66 and its data transmissivity to secondary radio 76 of security hub 26 via the secondary communication path 54.

Referring now to FIG. 6, when a fail-over or fallback connection is made for communications through the secondary communication path 54, the imaging device's 18 secondary radio 66 is communicatively connected to the security hub's 26 secondary radio 76. In a sub-GHz implementation of security hub 26, this fallback or secondary connection provides sub-GHz communications within the WLAN 12 (FIG. 1) for transmitting data through system 10, for example, between the monitoring imaging device 18 (FIG. 1) and the security hub 26. Security hub 26 is typically configured for data transmission on a cellular, sub-GHz, frequency for communication from WLAN 12 (FIG. 1) to WAN 14 (FIG. 1) through the mobile provider system 32 (FIG. 1) for processing by server 36 (FIG. 1). It is understood that, in addition to or instead of communicating with the network sever 36 via the cellular communication path 58, the security hub 26 may communicate with server 36 (FIG. 1) through router 28 (FIG. 1) and the internet provider 30 (FIG. 1). In any event, the data transmitted through the secondary communication path 54 may include diagnostic data. Diagnostic data typically includes data that can be used to identify an issue or fault condition of the connectivity failure in the primary communication path 52. For example, diagnostic data may correspond to statuses of components within system 10. Imaging device 18, security hub 26, or another system component that may define a node communicating by way of the secondary communication path 54, may command a diagnostic scan within the WLAN 12 (FIG. 1). The results of such a diagnostic scan may include the component statuses or other state information within WLAN 12 (FIG. 1).

Referring again to FIG. 1, devices within WLAN 12 and/or server 36 may use the diagnostic scan results or otherwise use the diagnostic data to facilitate troubleshooting by identifying potential issues within system 10, although it is understood that this processing may be performed by other system components. A diagnostic controller of server 36 or another component may include a rules engine that compares component statuses to stored data. The diagnosed issue may, for example, be a primary RF network outage, a primary ISP outage, a primary network SSID change, a primary network password or authentication failure, movement of a monitoring device 16 out of range of the primary radios 64, 74 (FIG. 2), network interference issues, or power loss issues. Any of this troubleshooting or diagnostic information may be push-notified to or otherwise made accessible to the user through user device 40, such as through sequential menus that can be navigated through the user device 40 as part of a troubleshooting or diagnostic application, and a corresponding log will typically be stored on one or more of the system devices.

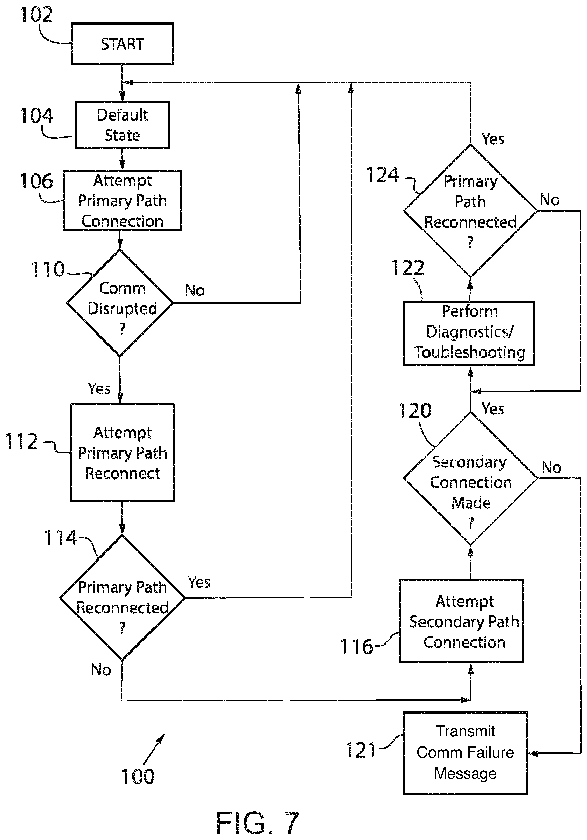

Referring now to FIG. 7 and with background reference to FIGS. 1 and 2, the automatic fallback communication path switching of a system 10 including a monitoring device 10, hubs 24, 26, etc., is shown schematically in the flowchart as process 100, which starts at block 102. At block 104, the system is in or attempts to initiate its default or operational state in which communications are made through the primary communication path 52. This may be done by way of, for example, a WIFI protocol using primary radios 64, 74 as represented at block 106. At decision block 110, monitoring device 16 evaluates whether the primary communication path 52 is functioning or if there is a connectivity issue or other communications disruption. "Disruption" in this regard applies both to loss of signal after a successful initial connection and to a failure to connect in the first instance. If there is no disruption, then the system 10 remains in the default operational state, and communications continue through the primary communication path 52. If, at decision block 110, there is a connectivity issue or communication(s) disruption, primary radio 64 of monitoring device 16 attempts to reconnect to primary radio 74 of hub 24 at block 112. At decision block 114, monitoring device 16 evaluates whether the reconnecting attempt was successful. If the reconnection was successful, then system 10 is restored to the default operational state at block 104, and system communications continue through the primary communication path 52 at block 106. If it is determined at decision block 114 that the reconnection attempt has failed, then a fail-over or fallback switching event(s) activates the secondary radios 66, 76 in block 116 in an attempt to establish communications through the secondary communication path 54. At decision block 120, the monitoring device evaluates whether the connection was made between the secondary radios 66, 76 and, therefore, whether data transfer is occurring through the secondary communication path 54. If not, then monitoring device 16 commands a reconnection attempt of the secondary radios 66, 76. If no connection is made through the secondary communication path 54 after a certain number of attempts or a certain amount of elapsed time for the attempts as dictated by, for example, a stored program on the monitoring device 16 or server 36, then server 36 may push an automated message to user device 40 indicating a total communication failure within system 10, as represented at block 121. If connection is recognized between the secondary radios 66, 76 at decision block 120, then the secondary communication path 54 is active, and data including diagnostic data is transmitted though the secondary communication path 54 at block 122. For example, if it is determined that disruption/failure occurred because the monitoring device 16 is out of range of the system's WIFI system, a "DEVICE OUT OF RANGE" message may be transmitted to and displayed on the user device 40. A user of system 10 or technical support personnel may access information from the diagnostic data to troubleshoot or diagnose and resolve the issues(s) in the primary communication path 52. In the present example, the user may simply reposition the monitoring device closer to the base station hub 24 (if present) and router 28. At subsequent decision block 124, monitoring device 16 evaluates whether communication through the primary communication path 52 was restored or reconnected. If the primary path's 52 connection is not restored, then communication is maintained through the secondary communication path 54 using the secondary radios 66 and 76, and troubleshooting or diagnostic activities continue at block 122. If the monitoring device 16 recognizes that communications through the primary path 52 are restored at decision block 124, then the process returns to block 104, where the system 10 operates in the default state with communication over the primary path 52 using the primary radios 64, 74.

## Claims

1. An electronic monitoring system (10) comprising:
a monitoring device (16) configured to monitor a characteristic within the environment, the monitoring device (16) including
a device primary radio (64) defined within a primary communication path (52) and configured to communicate monitoring data,
a device secondary radio (66) defined within a secondary communication path (54) and configured to communicate diagnostic data that contains information relating to a communication interruption upon detection of the communication interruption in the primary communication path (52);
a security hub (26) in communication with the monitoring device (16) through a WLAN (12), the security hub (26) including:
a hub primary radio (74) defined within the primary communication path (52) and configured to communicate the monitoring data; and
a hub secondary radio (76) defined within the secondary communication path (54) and configured to communicate the diagnostic data for receipt by a user device (40).

2. The electronic monitoring system (10) of claim 1, wherein the system (10) is configured such that:
when the system (10) is in a first, operational state, the device primary radio (64) and the hub primary radio (74) communicate the monitoring data through the primary communication path (52); and
when the system (10) is in a second, fault state, the device secondary radio (66) and the hub secondary radio (76) communicate the diagnostic data through the secondary communication path (54).

3. The electronic monitoring system (10) of claim 2, wherein:
a primary coverage zone is defined by a first area covered by the primary communication path (52); and
a secondary coverage zone is defined by a second area that extends beyond the primary coverage zone that is covered by the secondary communication path (54).

4. The electronic monitoring system (10) of claim 2, wherein the fault state is defined at least in part by a failure of communication between the device primary radio (64) and the hub primary radio (74) through the primary communication path (52).

5. The electronic monitoring system (10) of claim 4, wherein the monitoring device (16) is configured to detect a communication failure through the primary communication path (52) and to command an activation of the device secondary radio (66) upon detection of the communication failure through the primary communication path (52).

6. The electronic monitoring system (10) of claim 5, wherein, upon detection of a communication failure between the device primary radio (64) and the hub primary radio (74) through the primary communication path (52), the system (10) is configured to:
attempt to reestablish communications through the primary communication path (52); and
upon failure to reestablish communications through the primary communication path (52), the system (10) commands activation of the device secondary radio (66) and the hub secondary radio (76) to respective active modes to communicate the diagnostic data through the secondary communication path (54).

7. The electronic monitoring system (10) of claim 6, wherein the diagnostic data includes information about the communication failure through the primary communication path (52).

8. The electronic monitoring system (10) of any of the preceding claims, wherein the system (10) includes a controller and a user interface, wherein the controller is configured to:
identify a communication failure through the primary communication path (52);
command performance of a diagnostic scan of the system (10) to identify potential faults corresponding to the communication failure through the primary communication path (52); and
communicate information corresponding to the communication failure to the user interface for display on the user interface.

9. The electronic monitoring system (10) of any of the preceding claims, wherein the monitoring device (16) is defined by at least one of:
an imaging device (18) that is configured to capture visual images or video of a monitored area within the environment;
an audio device (16) that includes at least one of: (i) a microphone, and (ii) a speaker configured for audio communication or providing audible alerts; and
a sensor (20) configured to detect at least one of: (i) motion, (ii) opening or closing events or doors or windows, (iii) smoke, (iv) carbon monoxide, (v) water leaks, and (vi) temperature changes.

10. The electronic monitoring system (10) of any of the preceding claims, wherein the system (10) further comprises a second hub (24) communicatively coupled to the security hub (26) for connecting the WLAN (12) to a WAN (wide area network).

11. The electronic monitoring system (10) of claim 10, wherein the second hub (24) is configured to connect the WLAN (12) to the WAN using a first communication protocol, and the security hub (26) is configured to connect the WLAN (12) to the WAN using a second communication protocol.

12. The electronic monitoring system (10) of any of the preceding claims, wherein the device primary radio (64) and the security hub (26) primary radio (74) communicate the monitoring data through the primary communication path (52) at a first frequency, and the device secondary radio (66) and the security hub (26) secondary radio communicate the diagnostic data through the secondary communication path (54) at a second frequency that is lower than the first frequency of the primary communication path (52).

13. A method for communicating diagnostic information in an electronic monitoring system (10), the method comprising:
transmitting data between a monitoring device (16) and a hub (26) through a primary communication path (52) within a WLAN (12) (wireless local area network) as monitoring data;
detecting a failure in the transmission of the data through the primary communication path (52), and upon the transmission failure detection,
transmitting data between the monitoring device (16) and a security hub (26) through a secondary communication path (54) within the WLAN (12) as diagnostic data that contains information relating to the transmission failure through the primary communication path (52) for receipt by a user device (40).

14. The method of claim 13, further comprising:
performing a diagnostic scan of the system (10) after detecting the transmission failure through the primary communication path (52);
generating diagnostic information corresponding to results of the diagnostic scan; and
displaying the diagnostic information on a user interface.

15. The method of either of claims 13 and 14, further comprising:
transmitting the monitoring data at a first frequency of at least 2.4 GHz; and
transmitting the diagnostic data at a second frequency that is lower than the first frequency and that is in a sub-GHz frequency band.

## Patentansprüche

1. Elektronisches Überwachungssystem (10), umfassend:
eine Überwachungsvorrichtung (16), die dazu konfiguriert ist, ein Merkmal innerhalb der Umgebung zu überwachen, wobei die Überwachungsvorrichtung (16) Folgendes beinhaltet:
ein primäres Vorrichtungsfunkgerät (64), das innerhalb eines primären Kommunikationspfads (52) definiert und dazu konfiguriert ist, Überwachungsdaten zu kommunizieren,
ein sekundäres Vorrichtungsfunkgerät (66), das in einem sekundären Kommunikationspfad (54) definiert und dazu konfiguriert ist, Diagnosedaten, die Informationen in Bezug auf eine Kommunikationsunterbrechung enthalten, bei Erkennung der Kommunikationsunterbrechung in dem primären Kommunikationspfad (52) zu kommunizieren;
einen Sicherheits-Hub (26), der über ein WLAN (12) mit der Überwachungsvorrichtung (16) kommuniziert, wobei der Sicherheits-Hub (26) Folgendes beinhaltet:
ein primäres Hub-Funkgerät (74), das innerhalb des primären Kommunikationspfads (52) definiert und dazu konfiguriert ist, die Überwachungsdaten zu kommunizieren; und
ein sekundäres Hub-Funkgerät (76), das innerhalb des sekundären Kommunikationspfads (54) definiert und dazu konfiguriert ist, die Diagnosedaten zum Empfang durch eine Benutzervorrichtung (40) zu kommunizieren.

2. Elektronisches Überwachungssystem (10) nach Anspruch 1, wobei das System (10) so konfiguriert ist, dass:
wenn sich das System (10) in einem ersten, betriebsfähigen Zustand befindet, das primäre Vorrichtungsfunkgerät (64) und das primäre Hub-Funkgerät (74) die Überwachungsdaten über den primären Kommunikationspfad (52) kommunizieren; und
wenn sich das System (10) in einem zweiten, fehlerhaften Zustand befindet, das sekundäre Vorrichtungsfunkgerät (66) und das sekundäre Hub-Funkgerät (76) die Diagnosedaten über den sekundären Kommunikationspfad (54) kommunizieren.

3. Elektronisches Überwachungssystem (10) nach Anspruch 2, wobei:
eine primäre Abdeckungszone durch einen ersten Bereich definiert ist, der von dem primären Kommunikationspfad (52) abgedeckt wird; und
eine sekundäre Abdeckungszone durch einen zweiten Bereich definiert ist, der sich über die primäre Abdeckungszone hinaus erstreckt, die durch den sekundären Kommunikationspfad (54) abgedeckt wird.

4. Elektronisches Überwachungssystem (10) nach Anspruch 2, wobei der fehlerhafte Zustand mindestens zum Teil durch einen Ausfall der Kommunikation zwischen dem primären Vorrichtungsfunkgerät (64) und dem primären Hub-Funkgerät (74) über den primären Kommunikationspfad (52) definiert ist.

5. Elektronisches Überwachungssystem (10) nach Anspruch 4, wobei die Überwachungsvorrichtung (16) dazu konfiguriert ist, einen Kommunikationsausfall über den primären Kommunikationspfad (52) zu erkennen und eine Aktivierung des sekundären Vorrichtungsfunkgeräts (66) bei Erkennung des Kommunikationsausfalls über den primären Kommunikationspfad (52) zu befehlen.

6. Elektronisches Überwachungssystem (10) nach Anspruch 5, wobei das System (10) bei Erkennung eines Kommunikationsausfalls zwischen dem primären Vorrichtungsfunkgerät (64) und dem primären Hub-Funkgerät (74) über den primären Kommunikationspfad (52) zu Folgendem konfiguriert ist:
Versuchen, die Kommunikation über den primären Kommunikationspfad (52) wiederherzustellen; und
wobei bei Versagen der Wiederherstellung der Kommunikation über den primären Kommunikationspfad (52) das System (10) die Aktivierung des sekundären Vorrichtungsfunkgeräts (66) und des sekundären Hub-Funkgeräts (76) in den jeweiligen aktiven Modus befiehlt, um die Diagnosedaten über den sekundären Kommunikationspfad (54) zu kommunizieren.

7. Elektronisches Überwachungssystem (10) nach Anspruch 6, wobei die Diagnosedaten Informationen über den Kommunikationsausfall über den primären Kommunikationspfad (52) beinhalten.

8. Elektronisches Überwachungssystem (10) nach einem der vorhergehenden Ansprüche, wobei das System (10) eine Steuerung und eine Benutzeroberfläche beinhaltet, wobei die Steuerung zu Folgendem konfiguriert ist:
Identifizieren eines Kommunikationsausfalls über den primären Kommunikationspfad (52);
Befehlen der Durchführung eines Diagnose-Scans des Systems (10), um potenzielle Fehler zu identifizieren, die dem Kommunikationsausfall über den primären Kommunikationspfad (52) entsprechen; und
Kommunizieren von Informationen, die dem Kommunikationsausfall entsprechen, an die Benutzeroberfläche zur Anzeige auf der Benutzeroberfläche.

9. Elektronisches Überwachungssystem (10) nach einem der vorhergehenden Ansprüche, wobei die Überwachungsvorrichtung (16) durch mindestens eines aus Folgendem definiert ist:
eine Bildgebungsvorrichtung (18), die dazu konfiguriert ist, visuelle Bilder oder Videos eines überwachten Bereichs innerhalb der Umgebung aufzunehmen;
eine Audiovorrichtung (16), die mindestens eines aus Folgendem beinhaltet: (i) ein Mikrofon und (ii) einen Lautsprecher, die für Audiokommunikation oder das Bereitstellen von akustische Warnungen konfiguriert sind; und
einen Sensor (20), der dazu konfiguriert ist, mindestens eines aus Folgendem zu erkennen: (i) Bewegung, (ii) Öffnen oder Schließen von Ereignissen oder Türen oder Fenstern, (iii) Rauch, (iv) Kohlenmonoxid, (v) Wasserlecks und (vi) Temperaturänderungen.

10. Elektronisches Überwachungssystem (10) nach einem der vorhergehenden Ansprüche, wobei das System (10) des Weiteren einen zweiten Hub (24) umfasst, der kommunikativ mit dem Sicherheits-Hub (26) gekoppelt ist, um das WLAN (12) mit einem WAN (Wide Area Network) zu verbinden.

11. Elektronisches Überwachungssystem (10) nach Anspruch 10, wobei der zweite Hub (24) dazu konfiguriert ist, das WLAN (12) unter Verwendung eines ersten Kommunikationsprotokolls mit dem WAN zu verbinden, und der Sicherheits-Hub (26) dazu konfiguriert ist, das WLAN (12) unter Verwendung eines zweiten Kommunikationsprotokolls mit dem WAN zu verbinden.

12. Elektronisches Überwachungssystem (10) nach einem der vorhergehenden Ansprüche, wobei das primäre Vorrichtungsfunkgerät (64) und das primäre Funkgerät (74) des Sicherheits-Hubs (26) die Überwachungsdaten über den primären Kommunikationspfad (52) mit einer ersten Frequenz kommunizieren und das sekundäre Vorrichtungsfunkgerät (66) und das sekundäre Funkgerät des Sicherheits-Hubs (26) die Diagnosedaten über den sekundären Kommunikationspfad (54) mit einer zweiten Frequenz kommunizieren, die niedriger als die erste Frequenz des primären Kommunikationspfads (52) ist.

13. Verfahren zum Kommunizieren von Diagnoseinformationen in einem elektronischen Überwachungssystem (10), wobei das Verfahren Folgendes umfasst:
Übertragen von Daten zwischen einer Überwachungsvorrichtung (16) und einem Hub (26) über einen primären Kommunikationspfad (52) innerhalb eines WLAN (12) (Wireless Local Area Network) als Überwachungsdaten;
Erkennen eines Ausfalls in der Übertragung der Daten über den primären Kommunikationspfad (52) und bei der Erkennung des Übertragungsausfalls,
Übertragen von Daten zwischen der Überwachungsvorrichtung (16) und einem Sicherheits-Hub (26) über einen sekundären Kommunikationspfad (54) innerhalb des WLAN (12) als Diagnosedaten, die Informationen bezüglich des Übertragungsausfalls über den primären Kommunikationspfad (52) zum Empfang durch eine Benutzervorrichtung (40) enthalten.

14. Verfahren nach Anspruch 13, des Weiteren umfassend:
Durchführen eines Diagnose-Scans des Systems (10) nach dem Erkennen des Übertragungsfehlers über den primären Kommunikationspfad (52);
Erzeugen von Diagnoseinformationen, die den Ergebnissen des Diagnose-Scans entsprechen; und
Anzeigen der Diagnoseinformationen auf einer Benutzeroberfläche.

15. Verfahren nach einem der Ansprüche 13 und 14, des Weiteren umfassend:
Übertragen der Überwachungsdaten mit einer ersten Frequenz von mindestens 2,4 GHz; und
Übertragen der Diagnosedaten mit einer zweiten Frequenz, die niedriger ist als die erste Frequenz und die in einem Sub-GHz-Frequenzband liegt.

## Revendications

1. Système (10) électronique de surveillance comprenant :
un dispositif de surveillance (16) configuré pour surveiller une caractéristique au sein de l'environnement, le dispositif de surveillance (16) incluant
une radio primaire de dispositif (64) définie à l'intérieur d'un trajet de communication primaire (52) et configurée pour communiquer des données de surveillance,
une radio secondaire de dispositif (66) définie à l'intérieur d'un trajet de communication secondaire (54) et configurée pour communiquer des données de diagnostic qui contiennent des informations concernant une interruption de communication lors de la détection de l'interruption de communication dans le trajet de communication primaire (52) ;
une plateforme de sécurité (26) en communication avec le dispositif de surveillance (16) à travers un WLAN (12), la plateforme de sécurité (26) incluant :
une radio primaire de plateforme (74) définie à l'intérieur du trajet de communication primaire (52) et configurée pour communiquer les données de surveillance ; et
une radio secondaire de plateforme (76) définie à l'intérieur du trajet de communication secondaire (54) et configurée pour communiquer les données de diagnostic pour réception par un dispositif utilisateur (40).

2. Système (10) électronique de surveillance selon la revendication 1, dans lequel le système (10) est configuré de sorte que :
lorsque le système (10) se trouve sous un premier, état fonctionnel, la radio primaire de dispositif (64) et la radio primaire de plateforme (74) communiquent les données de surveillance à travers le trajet de communication primaire (52) ; et
lorsque le système (10) se trouve sous un second, état de défaillance, la radio secondaire de dispositif (66) et la radio secondaire de plateforme (76) communiquent les données de diagnostic à travers le trajet de communication secondaire (54).

3. Système (10) électronique de surveillance selon la revendication 2, dans lequel :
une zone de couverture primaire est définie par une première zone couverte par le trajet de communication primaire (52) ; et
une zone de couverture secondaire est définie par une seconde zone qui s'étend au-delà de la zone de couverture primaire qui est couverte par le trajet de communication secondaire (54).

4. Système (10) électronique de surveillance selon la revendication 2, dans lequel l'état de défaillance est défini au moins en partie par une défaillance de communication entre la radio primaire de dispositif (64) et la radio primaire de plateforme (74) à travers le trajet de communication primaire (52).

5. Système (10) électronique de surveillance selon la revendication 4, dans lequel le dispositif de surveillance (16) est configuré pour détecter une défaillance de communication à travers le trajet de communication primaire (52) et pour commander une activation de la radio secondaire de dispositif (66) lors de la détection de la défaillance de communication à travers le trajet de communication primaire (52).

6. Système (10) électronique de surveillance selon la revendication 5, dans lequel, lors de la détection d'une défaillance de communication entre la radio primaire de dispositif (64) et la radio primaire de plateforme (74) à travers le trajet de communication primaire (52), le système (10) est configuré pour :
tenter de rétablir des communications à travers le trajet de communication primaire (52) ; et
à l'issue d'une défaillance pour rétablir des communications à travers le trajet de communication primaire (52), le système (10) commande une activation de la radio secondaire de dispositif (66) et de la radio secondaire de plateforme (76) en modes actifs respectifs pour communiquer les données de diagnostic à travers le trajet de communication secondaire (54).

7. Système (10) électronique de surveillance selon la revendication 6, dans lequel les données de diagnostic incluent des informations concernant la défaillance de communication à travers le trajet de communication primaire (52).

8. Système (10) électronique de surveillance selon l'une quelconque des revendications précédentes, dans lequel le système (10) inclut un dispositif de commande et une interface utilisateur, dans lequel le dispositif de commande est configuré pour :
identifier une défaillance de communication à travers le trajet de communication primaire (52) ;
commander une performance d'un balayage de diagnostic du système (10) pour identifier des défaillances potentielles correspondant à la défaillance de communication à travers le trajet de communication primaire (52) ; et
communiquer des informations correspondant à la défaillance de communication à l'interface utilisateur pour affichage sur l'interface utilisateur.

9. Système (10) électronique de surveillance selon l'une quelconque des revendications précédentes, dans lequel le dispositif de surveillance (16) est défini par au moins l'un de :
un dispositif d'imagerie (18) qui est configuré pour capturer des images visuelles ou vidéo d'une zone surveillée à l'intérieur de l'environnement ;
un dispositif audio (16) qui inclut au moins l'un parmi : (i) un microphone, et (ii) un haut-parleur configurés pour une communication audio ou fournir des alertes audibles ; et
un capteur (20) configuré pour détecter au moins l'un parmi : (i) un mouvement, (ii) des événements d'ouverture ou de fermeture ou de portes ou de fenêtres, (iii) de la fumée, (iv) du monoxyde de carbone, (v) des fuites d'eau, et (vi) des changements de température.

10. Système (10) électronique de surveillance selon l'une quelconque des revendications précédentes, dans lequel le système (10) comprend en outre une seconde plateforme (24) accouplée de manière à pouvoir communiquer à la plateforme de sécurité (26) pour connecter le WLAN (12) à un WAN (wide area network, réseau longue portée).

11. Système (10) électronique de surveillance selon la revendication 10, dans lequel la seconde plateforme (24) est configurée pour raccorder le WLAN (12) au WAN en utilisant un premier protocole de communication, et la plateforme de sécurité (26) est configurée pour raccorder le WLAN (12) au WAN en utilisant un second protocole de communication.

12. Système (10) électronique de surveillance selon l'une quelconque des revendications précédentes, dans lequel la radio primaire de dispositif (64) et la radio primaire (74) de plateforme de sécurité (26) communiquent les données de surveillance à travers le trajet de communication primaire (52) à une première fréquence, et la radio secondaire de dispositif (66) et la radio secondaire de plateforme de sécurité (26) communiquent les données de diagnostic à travers le trajet de communication secondaire (54) à une seconde fréquence qui est inférieure à la première fréquence du trajet de communication primaire (52).

13. Procédé de communication d'informations de diagnostic dans un système (10) électronique de surveillance, le procédé comprenant les étapes consistant à :
transmettre des données entre un dispositif de surveillance (16) et une plateforme (26) à travers un trajet de communication primaire (52) à l'intérieur d'un WLAN (12) (réseau local sans fil, wireless local area network) comme données de surveillance ;
détecter une défaillance dans la transmission des données à travers le trajet de communication primaire (52), et
à l'issue de la détection d'une défaillance de transmission, transmettre des données entre le dispositif de surveillance (16) et une plateforme de sécurité (26) à travers un trajet de communication secondaire (54) à l'intérieur du WLAN (12) comme données de diagnostic qui contiennent des informations concernant la défaillance de transmission à travers le trajet de communication primaire (52) pour réception par un dispositif utilisateur (40).

14. Procédé selon la revendication 13, comprenant en outre les étapes consistant à :
exécuter un balayage de diagnostic du système (10) après détection de la défaillance de transmission à travers le trajet de communication primaire (52) ;
générer des informations de diagnostic correspondant aux résultats du balayage de diagnostic ; et
afficher les informations de diagnostic sur une interface utilisateur.

15. Procédé selon l'une ou l'autre des revendications 13 et 14, comprenant en outre les étapes consistant à :
transmettre les données de surveillance à une première fréquence d'au moins 2,4 GHz ; et
transmettre les données de diagnostic à une seconde fréquence qui est inférieure à la première fréquence et qui se trouve dans une sous-bande de fréquence en GHz.
